(19) Europäisches Patentamt
European Patent Office
Office européen des brevets

(11) **EP 2 651 095 A2**

(12) **EUROPEAN PATENT APPLICATION**

(43) Date of publication:
**16.10.2013 Bulletin 2013/42**

(51) Int Cl.:
**H04L 29/06** *(2006.01)*      **H04L 12/743** *(2013.01)*

(21) Application number: **13159028.3**

(22) Date of filing: **13.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.04.2012 US 201213443490**

(71) Applicant: **Telefonaktiebolaget L M Ericsson AB
(Publ)
164 83 Stockholm (SE)**

(72) Inventors:
• **Manhas, Tajinder
  Surrey, British Columbia V4N 4T8 (CA)**
• **Wang, Michael
  Vancouver, British Columbia V6H 2B5 (CA)**

(74) Representative: **Rees, Simon John Lewis
  Haseltine Lake LLP
  Redcliff Quay
  120 Redcliff Street
  Bristol BS1 6HU (GB)**

(54) **Scalable packet classification using associative memory**

(57)     Techniques for forming and using multi-space associative memory units are disclosed. One example method for retrieving classification rules for data objects begins with the retrieval of a first action for the data object by performing a first lookup in a first associative memory space in a memory unit, using a first key formed from the data object. A second action for the data object is retrieved by performing a second lookup in a second associative memory space, using a second key formed from the data object. The lookups are performed simultaneously, in some embodiments, or serially, in others. In some embodiments, the second lookup is performed after the first, in response to an information element retrieved from the first lookup, the information element indicating that an additional associative memory lookup is needed. A final action for the data object is determined from the results of the first and second lookups.

FIG. 1

EP 2 651 095 A2

**Description**

BACKGROUND

The present invention relates to associative memory circuits and techniques.

An associative memory is a memory structure in which data stored in the memory is accessed by its contents, as opposed to an explicit address. For this reason, associative memory is frequently called content-addressable memory (CAM). Other terms applied to this type of memory are associative storage or associative array. However, the last of these terms, "associative array," is often used to refer to the data structure held by an associative memory, rather than the memory device itself.

With an associative memory, a data word, or "key," supplied by an application or device to the associative memory is compared to data items stored in the memory. In some cases, the search of the memory continues only until a match is found, in which case the storage address and/or other data item associated with the matching item in the memory is returned. In other cases, the entire memory is searched, and the storage address and/or other associated data item for each and every matching item is returned.

The term CAM is frequently used to refer to hardware-based implementations of an associative memory. In some of these implementations, the hardware is designed to search the entire contents of the memory simultaneously, i.e., in a single lookup operation. Other hardware-based implementations use advanced techniques such as hardware pipelining, data hashing, and the like, to perform the search in just a few clock cycles. CAMs designed according to all of these approaches are much faster at search operations than a conventional RAM. However, this increase in speed comes at a cost. A conventional RAM device has very simple storage cells. By contrast, each memory bit in a hardware-based CAM must have an associated comparison circuit, so that matches between the stored data bit and a corresponding bit in the supplied key can be detected. The outputs from bit matching circuitry for each of the bits in each storage location must be combined, using additional circuitry, to yield a signal that indicates whether or not the entire key has been matched. All of this additional circuitry increases the size and power consumption of the CAM device.

In a binary associative memory, the search keys include only 1's and 0's. Thus, the search key must exactly match a stored data word to trigger a "hit." However, ternary associative memories are also well known. With a ternary associative memory (frequently referred to as a Ternary-CAM, or TCAM), a stored data word may have one or more "Don't Care" elements. Thus, for example, a TCAM data word might have a stored value of "1X0X." This will match any of several search keys, i.e., "1000," "1001," "1100," and "1101." A ternary associative memory is even more complex than a binary version, however, as the storage cells must accommodate three possible states for each bit, instead of just two.

Associative memories are commonly used in computer networking equipment, and in particular are often used with an access control list (ACL), which in a networking application provides a list of rules that are applied to incoming packets, based on the contents of those packets. In a file system application, an ACL specifies permissions attached to objects in a computer, such as which users or system processes are allowed to access particular objects, and/or which operations that are allowed for a given user or system process.

In networking applications, CAMs, and TCAMs in particular, are very widely used for storing ACLs. These ACLs store "rules," which correspond to particular patterns that might appear in a packet header. These rules determine what "action" or set of actions should be taken when a packet containing that pattern is received. For example, all or part of the packet header is used as the key supplied to a TCAM, which returns one or more actions associated with a stored data word that matches the keyword.

As networking equipment and techniques have become more and more complex, the number of rules that must be managed in an ACL has exploded. Accordingly, research continues into scalable, cost-effective solutions for handling millions of rules, at multi-gigabit speeds.

An article entitled "Content-Addressable Memory (CAM) Circuits and Architectures: A Tutorial and Survey," by K. Pagiamtzis & A. Sheikholeslami, IEEE Journal of Solid-State Circuits, v. 41, No. 3, March 2006, describes the technologies and techniques used in many CAM circuits. Another article, entitled "Algorithms for Advanced Packet Classification with Ternary CAMs," by K. Lakshminarayanan et al., SIGCOMM '05, August 21-26, 2005, Philadelphia, Pennsylvania, USA, describes algorithms for addressing several issues with the application of TCAMs to ACL applications.

SUMMARY

In practical applications, the complexity and size of the rule set in an Access Control List (ACL) is growing. Key sizes are also getting larger, since the processing rules defined by rule set S are making increasingly finer distinctions between data objects. Because the size of an associative memory is a function of the key size and the rule set size, this means that the memory resources required by the associative memory are growing extremely rapidly.

In several embodiments of the present invention, this problem is addressed by separating the classification rules for data packets into multiple databases, i.e., into multiple associative memory spaces, where different keys are used to perform lookups on the separate databases. If the overall rule set is judiciously divided among the multiple databases, then the key length required for at least some of the databases can be significantly less than the key length that would be required if all of the rules were managed with a single memory space.

While packet processing applications are used as examples below, the inventive techniques described herein can be implemented in a variety of data processing platforms, using any of several hardware architectures. One example embodiment, suitable for use in a packet network node or other data processing device, is a method for retrieving classification rules for data objects using an associative memory unit. The method begins with the retrieval of a first action for the data object by performing a first lookup in a first associative memory space in a memory unit, using a first key formed from the data object. A second action for the data object is retrieved by performing a second lookup in a second associative memory space in a memory unit, using a second key formed from the data object. The second key differs from the first key. The lookups can be performed simultaneously, in some embodiments, or serially, in others. In some embodiments, the second lookup is performed after the first, and is performed in response to an information element retrieved from the first lookup, the information element indicating that an additional associative memory lookup is needed.

A final action for the data object is determined from the results of the first and second lookups, i.e., from the first and second actions. In some embodiments, this determination of a final action includes selecting between the first and second actions based on a relative priority between the first and second actions. This relative priority is based on a predetermined relative priority between the first and second associative memory spaces, in some embodiments. In others, the relative priority is based on priority data or other metadata retrieved from the first and second lookups.

One example application for the method summarized above is in a data processing device is a packet network node, such as a router or switch. In this case, the data objects discussed may be incoming data packets, for example, in which case the first and second keys used in the lookups described above are formed from data fields contained in the data packet, such as from the packet header. Non-limiting examples of data fields that may be used to form the keys include the destination address for the data packet; the source address for the data packet; an optional Internet Protocol (IP) header field; a Type of Service (TOS) field; a differentiated services code point (DSCP) field; an Explicit Congestion Notification (ECN) field; an IP precedence field; a Layer 4 (L4) protocol field; and an L4 information field.

Other embodiments of the present invention include processes for constructing a multi-space associative memory such as the sort used in the techniques summarized above. One example method begins with the division of a plurality of classification rules for packet processing into at least first and second rule groups, based on which of a plurality of packet data fields are relevant to each classification rule. Next, a first associative memory space, addressable with keys having a first length, is created, by storing a key value for each classification rule in the first group of rules and a corresponding action in a memory unit. A second associative memory space is also created, by storing a key value for each classification rule in the second group and a corresponding action in the memory unit. This associative memory space is addressable by keys having a second length. In some embodiments, the process continues with the derivation of one or more priority values from each of one or more of the classification rules, the one or more priority values indicating which of first and second actions retrieved for a given packet from the first and second associative memory spaces, respectively, should be applied. These priority values are then stored in the first associative memory space or the second associative memory space, or both, in association with key values corresponding to the classification rules from which the priority values were derived.

Further embodiments of the present invention include data processing circuits configured to carry out one or more of the methods described above. Of course, the present invention is not limited to the above-summarized features and advantages. Indeed, those skilled in the art will recognize additional features and advantages upon reading the following detailed description, and upon viewing the accompanying drawings.

BRIEF DESCRIPTION OF THE DRAWINGS

Figure 1 illustrates a content-addressable memory.
Figure 2 is a system diagram illustrating the use of a content-addressable memory in a packet processing node.
Figure 3 illustrates a conventional associative memory.
Figure 4 illustrates a multi-space associative memory according to some embodiments of the present invention.
Figure 5 illustrates details of one example implementation of a multi-space associative memory.
Figure 6 illustrates a parallel lookup process using a multi-space associative memory.
Figure 7 illustrates a serial lookup process using a multi-space associative memory.
Figure 8 illustrates one router-based implementation of a multi-space associative memory.
Figure 9 is another example of a router-based implementation of a multi-space associative memory.
Figure 10 is a process flow diagram according to some embodiments of the present invention.
Figure 11 is another process flow diagram according to some embodiments of the present invention.

Figure 12 illustrates a process for forming a multi-space associative memory.

DETAILED DESCRIPTION

The invention is described more fully hereinafter with reference to the accompanying drawings, in which examples of embodiments of the invention are shown. This invention may, however, be embodied in many different forms and should not be construed as limited to the embodiments set forth herein. It should also be noted that these embodiments are not mutually exclusive. Thus, components or features from one embodiment may be assumed to be present or used in another embodiment, where such inclusion is suitable.

For purposes of illustration and explanation only, these and other embodiments of the present invention are described herein in the context of operating in a packet data network. It will be understood, however, that the present invention is not limited to such embodiments and may be embodied generally in various types of computer and communications equipment.

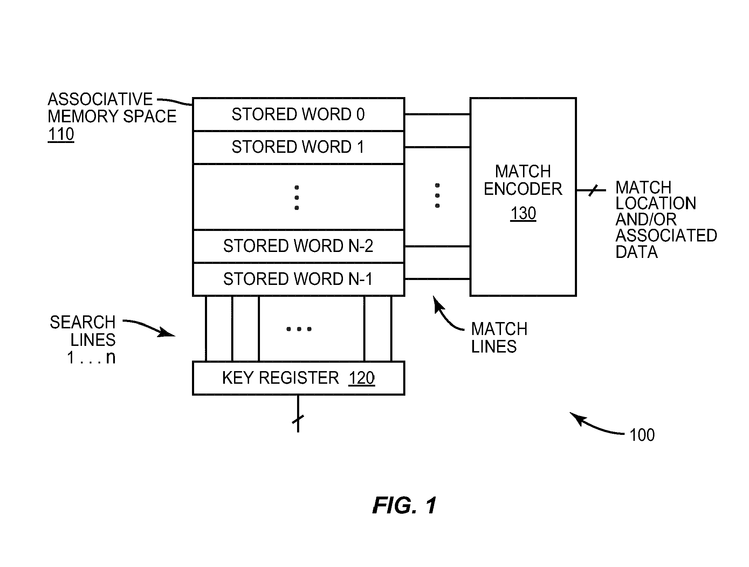

Figure 1 illustrates generally an associative memory unit 100. A unit of this sort is often referred to as a content-addressable memory (CAM). While the term CAM is often used to refer to a hardware-based implementation of an associative memory system, these terms are used interchangeably herein; thus, either term may refer to an exclusively hardware-based system, or to an associative memory system that utilizes a software-programmed microprocessor to perform at least part of the searching and matching operations of the associative memory, or to some combination of both.

The associative memory unit 100 includes three key parts. First, an associative memory space 110 holds the stored data words. In the system pictured in Figure 1, the associative memory space 100 holds $N$ stored data words; as noted above, some applications may require the storage of tens of thousands of data words, or more.

Associative memory unit 100 further includes a key register 120. Key register 120 receives an $n$-bit search key from the system or device that is using the associative memory unit 100 and applies the $n$ bits of the key to each of the stored data words for a bit-by-bit comparison. In the system pictured in Figure 1, the results of the comparisons appear on the match lines corresponding to each of the stored data words; these match lines are gather together and encoded with match encoder 130. In some units, for example, $N$ parallel match lines are encoded into a binary address. Thus, $N$ match lines are encoded into a binary number of length $\log_2(N)$.

In some hardware-based implementations of the associative memory, the comparison of the search key to the stored data words is performed using bit comparison circuits associated with each and every storage cell. As a result, the memory structure holding the associative memory space is considerably more complex than a conventional RAM, since each cell (the bit-level building block of the memory) includes circuitry for both bit circuitry and for bit comparison. This complexity is increased somewhat for ternary associative memory circuits. Several configurations of these associative memory cells are possible and are all well known to circuit designers; some of these configurations are described in detail in the Pagiamtzis article referenced earlier.

One advantage of many hardware-based implementations is that the search key can be compared to all of the stored data words at once, or within just a few operations. The speed of this search operation is particularly advantageous in highspeed packet processing applications, where data packets are processed at very high rates (e.g., at many gigabits/second) and where a lookup to an Access Control List (ACL) must be performed for every packet.

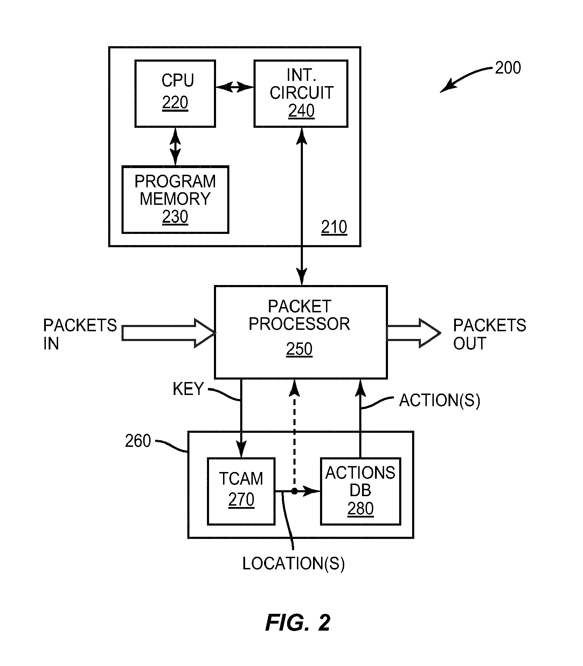

An example application of an associative memory unit is illustrated in Figure 2, which illustrates a packet processing node 200. The features of packet processing node 200 might be found in a router or network switch, for example.

Packet processing node 200 can be viewed as including a control plane portion and a data plane portion. Control processing circuit 210 occupies the control plane, and includes a microprocessor 220, which is configured with software stored in program memory 203, and an interface circuit that couples the control processing circuit 210 to other elements of the packet processing node 200. Because the software-based operations performed by control processing circuit 210 are relatively slow, requiring several or many clock cycles, these operations are generally restricted to "low-touch" operations, i.e., operations that need to be performed relatively infrequently, compared to the rate at which the packet processing node 220 as a whole is handling arriving data packets.

"High- touch" operations, i.e., operations that are performed on at least a substantial portion of the arriving packets, are performed in the data plane, typically using a dedicated, hardware- based packet processing engine. In the system illustrated in Figure 2, packet processor 250 performs the high- touch operations on received data packets. More particularly, packet processor 250 parses the headers of arriving packets and forms search keys for searching an ACL, to determine the appropriate packet- specific action that should be taken. As seen in Figure 2, this key is applied to an associative memory unit 260, which returns one or more instruction words, or "actions, " in response. Packet processor 250 then handles the corresponding data packet according to the action or actions retrieved from the associative memory unit 260. For the purposes of this disclosure, the term "action" should be understood to refer generally to a data item returned in response to a lookup operation performed for a data packet or other data object. Of course, the action may be encoded in any of a variety of forms. In the discussion that follows, actions such as "Drop" and "Permit" are used- it will be understood that these correspond to encoded data items returned from an associative memory lookup.

In the example configuration pictured in Figure 2, the associative memory unit 260 includes a ternary-CAM (TCAM) circuit 270 and an actions database 280. If a match between the search key and the contents of the TCAM's memory space is found, the TCAM 270 produces one or more encoded location words corresponding to those matches. The location word or words are applied to the actions database 280 to retrieve a corresponding action or actions, which is/are supplied to the packet processor 250.

In some implementations of an associative memory unit, the location word or words are provided to the requesting device or application, instead of or in addition to the action. In implementations in which only the location word or words are provided, the requesting device or application can use the location word to query a separate database, stored in a conventionally addressed memory, to retrieve a corresponding action or other associated data. Thus, it should be understood that various associative memory units may be configured to respond to a lookup operation with a location word (or words), or an associated data element, such as an "action," or with both. Likewise, it should be understood that the partitioning of components shown in Figure 2 is only an example configuration; the grouping of functional components may differ from one packet processing node to another.

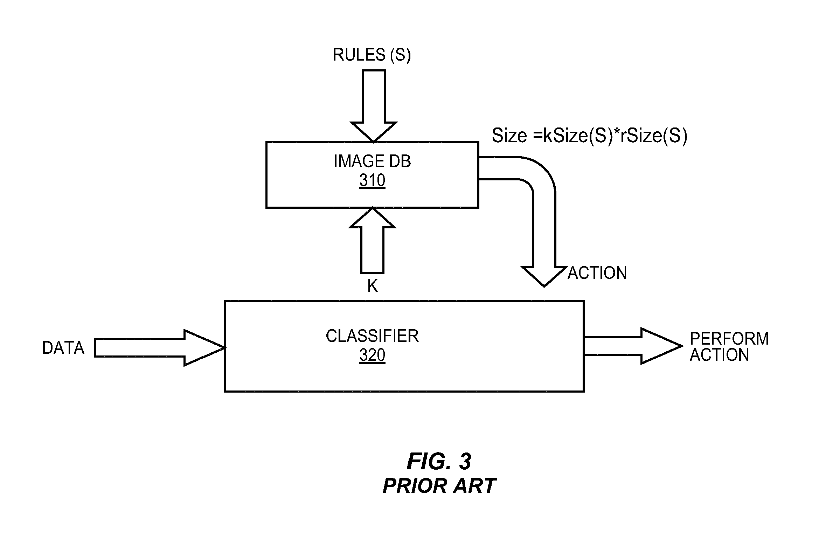

Figure 3 is a more general, and somewhat more conceptual, illustration of the application of an associative memory. In image database 310, a set of rules, defined as set S in the figure, is mapped to a corresponding set of possible key values, where each rule in S is associated with at least one key value. Each rule defines one or more actions that should be taken in response to the key value(s) associated with the rule. It should be understood that image database 310 can be implemented in an associative memory structure like those illustrated in Figures 1 and 2.

Referring again to Figure 3, data objects flow into classifier 320, which generates a key K from each data object and submits it to the image database 310. If the value of key K is found among the stored data words, the image database 310 returns the corresponding action or actions to the classifier 320, which then performs the action.

As indicated by Figure 3, the size of the associative memory space in an associative memory is primarily driven by two factors. First is the size of the rule set, rSize(S), the number of rules in the rule set. This is effectively the number of different mappings between actions and possible key values that must be managed. Second is the length of the key used to index the image database, kSize (S). Referring briefly back to Figure 1, rSize(S) can be understood to correspond generally to the associative memory space depth, $N$, while kSize(S) is the associative memory space width, $n$. Accordingly, the size of the associative memory space is at least:

$$Size = kSize(S) * rSize(S) \quad . \qquad\qquad\qquad (1)$$

In practical applications, the complexity and size of the rule set S is growing much larger over time. Key sizes are also getting larger, since the processing rules defined by rule set S are making increasingly finer distinctions between data objects. In packet data processing nodes, for instance, previous systems might have been only concerned with distinguishing between packets based on their source and/or destination addresses. Increasingly, however, a packet processing node must distinguish between packets based on one or several additional fields in the packet header, such as layer 4 (transport layer) protocol identifiers or parameters, IP Precedence , Type of Service (TOS), and Differentiated Services (DS) fields, and/or optional Internet Protocol (IP) fields.

Generally speaking, the key size is determined by the number and sizes of the number of "tuples" included in the key, where the term "tuple" is used herein to refer to an element in an ordered list of elements. An ordered list of 5 elements, for example, is a 5-tuple; more generally, an ordered list of $n$ elements is an $n$-tuple. Each element can include one or several bits - for example, each element in an $n$-tuple may correspond to a particular field in an IP packet header.

The number of tuples included in a key is conventionally driven by the union of all tuples (e.g., fields) that are relevant to any of the rules in a rule set S (e.g., an ACL rule set). Accordingly, for example, if a rule set is expanded to distinguish between packets based on a previously unused header field, the key must be expanded to include a new element (tuple) corresponding to that header field. Provided that all of the previous rules are still relevant, the key must retain all of its previous elements as well.

With this approach, then, increasing the number of tuples in the match criteria (e.g., for ACL classifications) requires the associative memory key size to increase, even if most of the rules do not require the larger key size. For a given memory size (as measured by total number of bits), this reduces the number of available entries in the associative memory space, even if some of the tuples are only infrequently specified in the rule set. This results in an inefficient, and costly, use of memory resources.

In several embodiments of the present invention, this problem is addressed by separating the classification rules for data packets into multiple databases, i.e., into multiple associative memory spaces, where different keys are used to perform lookups on the separate databases. If the overall rule set is judiciously divided among the multiple databases, then the key length required for at least some of the databases can be significantly less than the key length that would be required if all of the rules were managed with a single memory space.

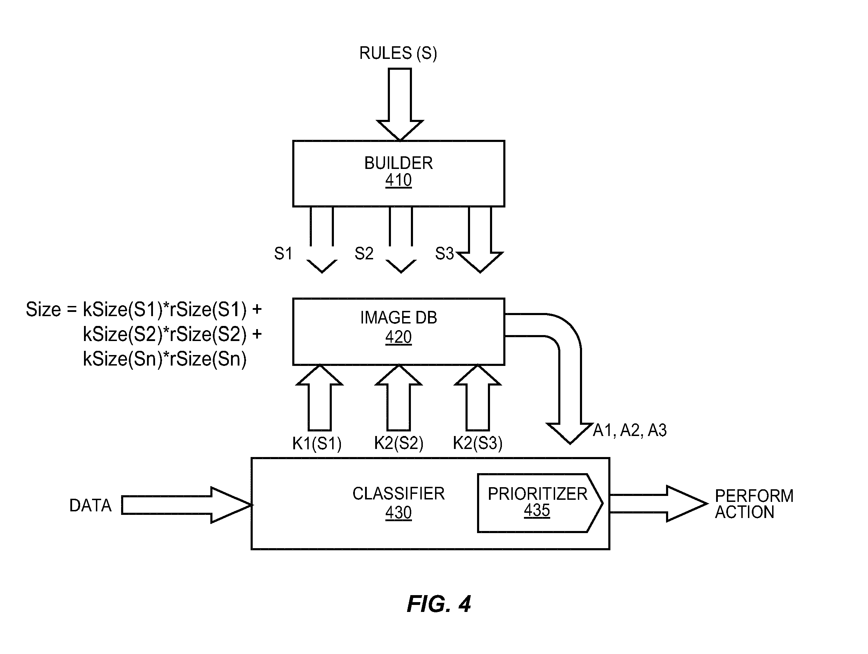

This approach is illustrated in Figure 4, where database builder 410 sorts a rule set S into three subsets: S1, S2, and S3. It will be appreciated, of course, that a division into three subsets is but one possibility - division into any number of subsets greater than one is possible. These three rule subsets are used to form three separate associative memory spaces in image database 420, where each associative memory space is addressable with a separate key as discussed in further detail below.

Each subset of rules will have a corresponding set of relevant matching criteria, i.e., a corresponding set of tuples used to assemble the search key for that subset of rules. Preferably, the sets of criteria for the rule subsets will differ from one another, at least partly. For instance, assume that rule set S includes 100 rules, each of which corresponds to one or several of five matching criteria: A, B, C, D, and E. Assume further that a subset S1, consisting of 20 rules can be found, such that only three criteria, A, B, and C, are relevant. A second subset S2, consisting of 40 rules, has three different relevant criteria: A, C, and D. Finally, assume that the remaining subset S3, also consisting of 40 rules, has four relevant criteria: B, C, D, and E. For the sake of simplicity, also assume that all criteria A-E correspond to tuples $T_A$, $T_B$, ... $T_E$, having the same length, e.g., one bit each. Then, the search key for subset S1, i.e., K1 (S1), is assembled from the corresponding tuples: $T_A T_B T_C$. Similarly, K2(S2) = $T_A T_C T_D$ and K3(S3) = $T_B T_C T_D T_E$.

Referring again to Figure 4, the illustrated system includes a classifier 430, which receives data objects (e.g., data packets in a packet communication network) and generates the three keys K1(S1), K2(S2), and K3(S3) from each data object. These three keys are submitted to the image database 420, which applies them to the three corresponding associative memory spaces for the rule subsets S1, S2, and S3. Image database 420 returns one or more actions for each of these three separate lookups. Classifier 430 uses these returned actions to determine how to handle the corresponding data object. In some cases, as will be discussed in further detail, this may involve the application of one or more prioritization rules, by a prioritizer 435.

In Figure 4, three actions A1, A2, and A3 are shown, corresponding to a single action returned from each lookup operation. However, no action at all might be returned for a given lookup/memory space, or more than one action might be returned, depending on the configuration and/or the particular contents of the image database.

As can be seen from the detailed example given above, this approach can result in a total memory usage that is considerably smaller than would be required if only one associative memory space were used. Given the numerical example above, for instance, a single-space associative memory would require a memory size of 500 (100 x 5) to accommodate the 100 rules indexed by a 5-bit key. The multi-space associative memory described above, on the other hand, requires 60 cells of memory to accommodate the associative memory space for rule subset S1 (20 rules x 3 bits), 120 cells to accommodate the space for rule subset S2 (40 rules x 3 bits), and 160 cells to accommodate the space for rule subset S3 (40 rules x 4 bits), for a total of 340 cells. This is a substantial (32%) savings in memory, which can be traded, as necessary for larger and more complex rule sets. With longer key sizes and more complex rule sets, the savings in memory can be even more pronounced.

The dividing of the rule set into multiple subsets can be performed in any number of ways. It should be appreciated that for any given rule set and a given number of subsets, there will be at least one optimal partitioning of the rules into that number of subsets, given that at least some of the rules depend on fewer than all of the matching criteria that are relevant to the rule set as a whole. However, achieving an optimal partitioning of the rules is not necessary to obtain the benefits of reduced memory size. Accordingly, while one approach to dividing the rules into the subsets is to assemble subsets in such a way as to optimize the total memory usage, another approach that may be suitable in many circumstances is to simply divide the rules into subsets so that the total length of the keys used to index the multiple spaces is minimized. Other approaches may also be used.

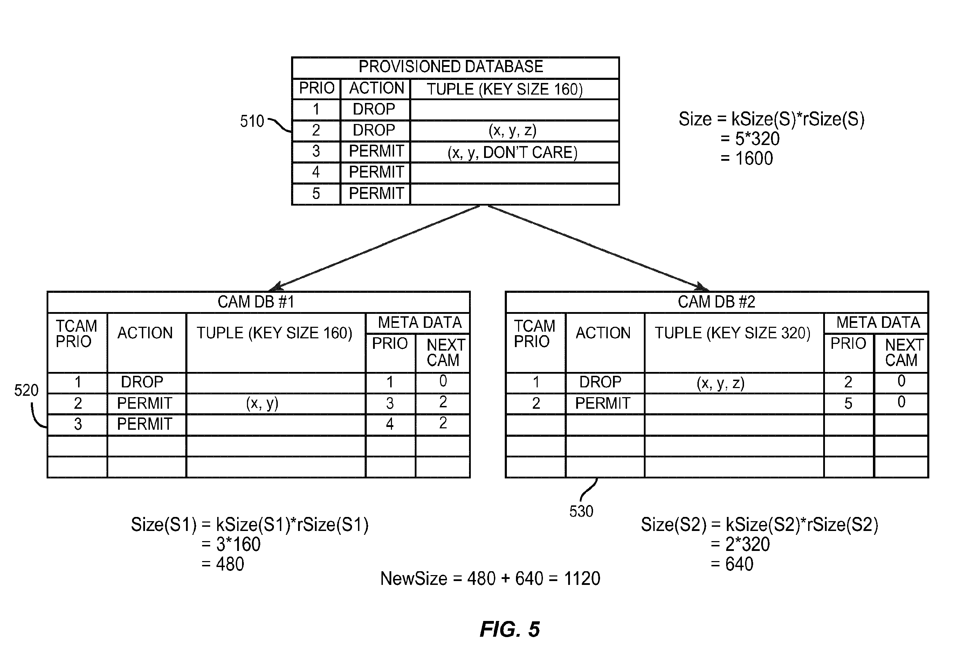

Figure 5 illustrates details of an example of a multi- space associative memory approach to an ACL. Block 530 shows a combined rule set that includes five prioritized rules that are accessed with a key having a length of 320. As seen in this block, if the key is made up of a 3- tuple having the element values (x, y, z), then the action returned is "Drop." On the other hand, if the key has the value (x, y, "don't care"), then the action returned is "Permit." In this implementation, the rules are prioritized, so (x, y, z) results in a "Drop" action, while a tuple that includes x and y but that has any value other than z for the third element will result in a "Permit" action. The total memory space required for a single- space associative memory for storing this rule set is 1600 cells (5 x 320).

The rule set illustrated in block 510 can be easily partitioned into two subsets, which are used to form two distinct associative memory spaces, as pictured in blocks 520 and 530. The first of these spaces, in block 520, is indexed by a 160-bit key, which corresponds to the first two tuples of the key used in block 510. The other space, in block 530, is indexed by the entire 320-bit 3-tuple. However, only those rules that require all three tuples are mapped to block 530. Accordingly, block 530 only requires two rules to be mapped to it, including a first rule that specifies "Drop" for a key value of (x,y,z). Block 520 has three rules mapped to it, but uses a shorter (160-bit) key. Block 510 thus requires a memory size of 480 (3 x 160), while block 520 requires a memory size of 640 (2 x 320), for a total memory size of 1120. Again, this is a substantial savings in memory, amounting to a 30% reduction.

Looking more closely at Figure 5, it can be seen that the associative memory spaces defined by blocks 520 and 530 include additional "metadata" for each of the data words (rules) stored in the memory spaces. This metadata can be used to control the relative priority of the results. For example, a packet carrying the tuples x, y, and z will generate a match from both blocks 520 and 530. First, the match between the two-tuple (x,y) and the contents of block 520 will generate a "Permit" action, which is associated with two items of metadata. The first is a "priority" field, which is used to signal an effective priority for the action. For the two-tuple (x,y), the priority field has a value of 3. The second is a "next CAM" field, which is used to signal whether any results from another associative memory space should be considered in addition to the present result. For the two-tuple (x,y), the "next CAM" field has a value of 2, which indicates that results from CAM database 2 should also be considered. (Note that a value of 0 would indicate that no results from a subsequent associative memory space should be considered.)

The packet carrying the tuples x, y, and z will also generate a match from block 530, this match specifying a "Drop" action. While this appears to contradict the "Permit" action retrieved from block 520, the "Drop" action from block 530 is associated with a priority field value of 2, which indicates a higher relative priority for the "Drop" action retrieved from block 530. (In the illustrated examples, a lower value for the priority field indicates a higher priority - of course, the opposite scheme could be used instead.) The "Drop" action from block 530 is also associated with a "next CAM" field value of 0, indicating that results from any subsequent associative memory space can be disregarded.

The results from this prioritization process can be compared with the results obtained from the single-space associative memory represented by block 510. There, prioritization is imposed by the order of the rules in the memory space. As a result, because the first match between the key (x,y,z) and the contents of the memory space returns a "Drop," that action should be taken. Accordingly, the two-space associative memory represented by blocks 520 and 530 results in exactly the same behavior as the single-space associative memory of block 510, when the metadata is taken into account. Although storing the metadata requires additional memory space, this additional memory space is likely to be quite small, in relative terms. Here, for example, assume that three bits are needed to encode the relative priorities, while two bits are required to encode the "next CAM" field. In this case, an additional 15 bits are needed to hold the metadata for the associative memory space of block 520, and an additional 10 bits are needed to hold the metadata for the associative memory space of block 530. This increases the total memory size for the two spaces to 1145, which is still much smaller than the 1600 required for the single-space associative memory of block 510. It will be appreciated, of course, that the memory cells used to store associated data, including the metadata, are considerably simpler than those used to hold the data words matched against the search keys, as the matching circuitry is not needed. Thus, the additional memory required for the metadata will quite often have a negligible impact on circuit size and cost.

There are several different approaches to searching the multiple associative memory spaces formed according to the techniques described above. Generally speaking, the associative memory spaces can be searched in a serial fashion or in a parallel fashion (i.e., simultaneously). When more than two associative memory spaces are used, a combination of these approaches may be used.

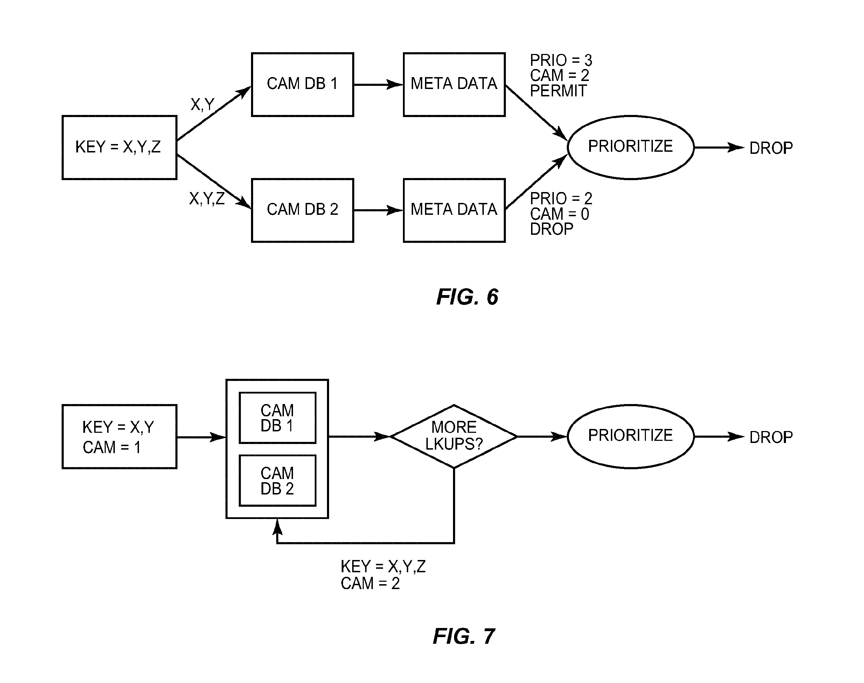

Figures 6 and 7 illustrate the parallel and serial approaches, respectively, for an associative memory unit having two associative memory spaces. In Figure 6, two different key values are presented simultaneously to CAM database 1 and CAM database 2. In this example, a two-tuple having the value (x,y) is presented to CAM database 1, while a three-tuple having the value (x,y,z) is presented to CAM database 1. (The contents of these databases correspond to the contents of blocks 520 and block 530 in Figure 5.) Each lookup results in a "hit" - CAM database 1 returns an action of "Permit," with metadata indicating a relative priority of 3 and a "next CAM" field value of 2, while CAM database 2 returns an action of "Drop" with a priority value of 2 and a "next CAM" field value of 0. Because the result from CAM database 2 has a lower priority field value, the prioritizer selects the "Drop" action. Note that because the relative priorities unambiguously identify the proper action to take, the "next CAM" field is not needed in this example.

In Figure 7, a serial approach is taken. The first associative memory space, CAM database 1, requires only the shorter key, which is a two-tuple carrying the value (x,y). This key is applied to Cam database 1, which returns an action of "Permit," along with metadata indicating a relative priority of 3 and a "next CAM" field value of 2. Because the "next CAM" field indicates that CAM database 2 should be consulted, the longer key, a three-tuple carrying the value (x,y,z) is supplied to CAM database 2, which returns an action of "Drop" with a priority value of 2 and a "next CAM" field value of 0. Once again, because the "Drop" action is associated with a lower priority field value, the "Drop" action is taken. Note that if CAM database 1 had returned a "next CAM" field value of 0 along with the "Permit" action, then the second lookup, using CAM database 2, would not have occurred, and the "Permit" action would have been taken. Likewise, if CAM database 1 had returned a priority field value of 1 along with the "Permit" action, then the "Permit" action would have been taken, notwithstanding the "Drop" action retrieved from CAM database 2.

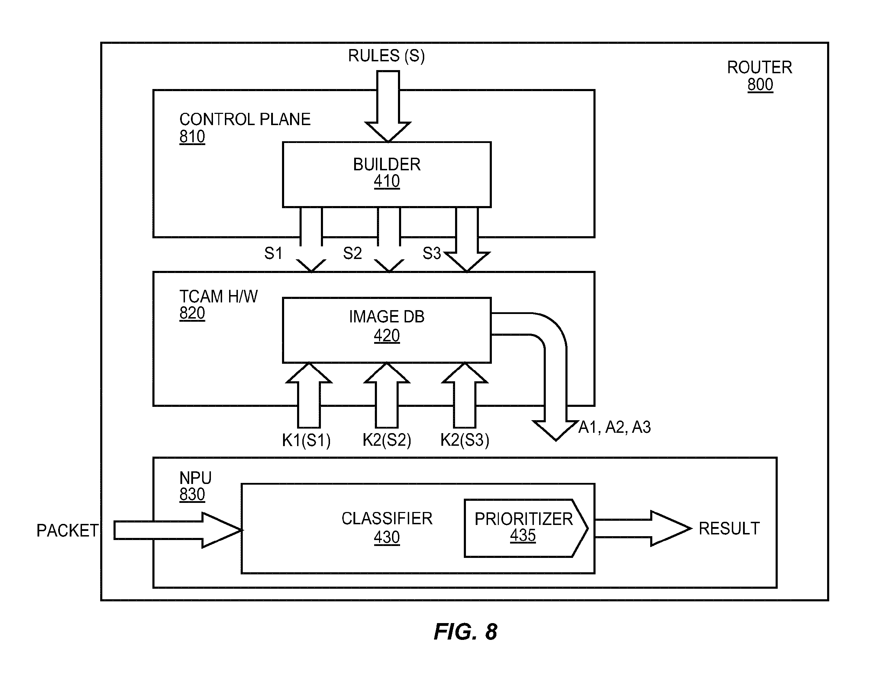

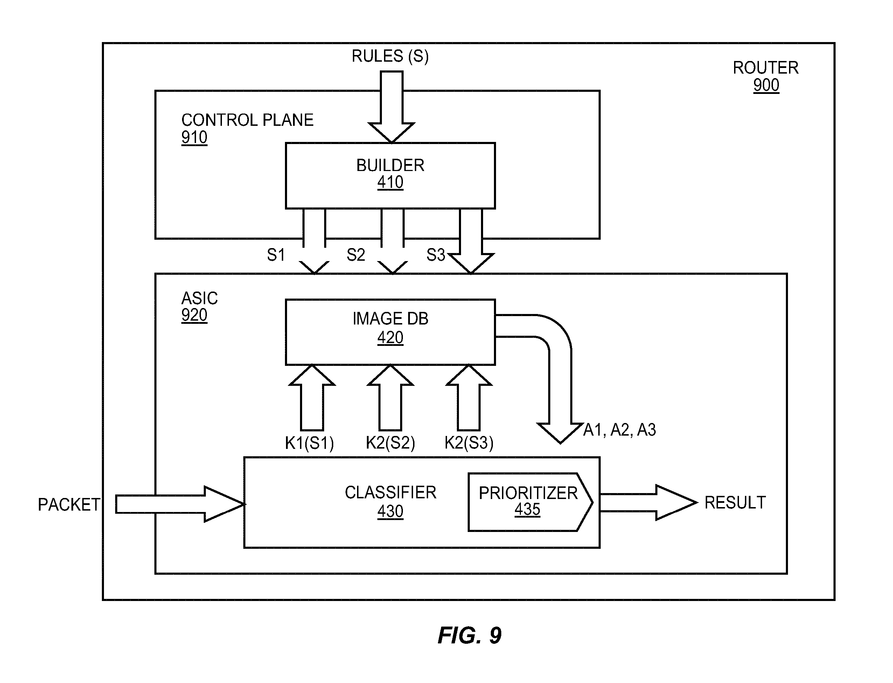

The techniques described above can be implemented in a variety of data processing platforms, using any of several hardware- and hardware/software-based architectures. Figures 8 and 9 illustrate two examples of implementations in a packet router application. The router 800 in Figure 8 uses a separate TCAM hardware unit 820 and network-processor unit 830 to host the associative memory and classifier/prioritizer functions, respectively. Router 900 in Figure 9, on the other hand, is based on an application-specific integrated circuit (ASIC) 920, which incorporates both the associative memory and classifier/prioritizer functions. Note that in both cases, the rule builder 410, image database 420, classifier 430, and prioritizer 435 illustrated in Figure 4 have been mapped to the router-specific implementations represented by Figures 8 and 9. Note also that rule builder 410, which occupies control planes 810 and 910 in these figures, may be implemented on board the router, in some implementations, or may represent an offline process, in others. In the former, the router 800 or 900 is configured with several rules, which are sorted into subsets by an onboard processor, which also creates the multiple associative memory spaces in the associative memory unit (TCAM H/W 820 in Figure 8 and ASIC 920 in Figure 9). With an offline approach, the rules are sorted into subsets externally to the router, and the associative memory spaces configured accordingly.

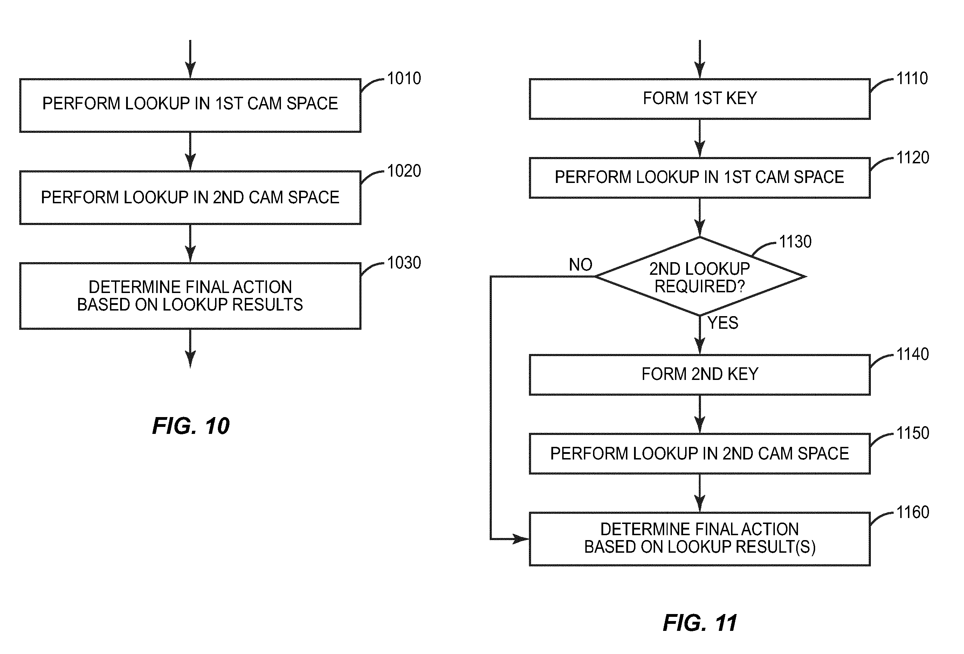

With the above detailed description in mind, it will be appreciated that Figure 10 illustrates a general method, suitable for use in a packet network node or other data processing device, for retrieving classification rules for data objects using an associative memory unit. The illustrated process begins, as shown at block 1010, with the retrieval of a first action for the data object by performing a first lookup in a first associative memory space in a memory unit, using a first key formed from the data object. Block 1020 illustrates the retrieval of a second action for the data object by performing a second lookup in a second associative memory space in a memory unit, using a second key formed from the data object. The second key differs from the first key. Note that the lookups can be performed simultaneously, in some embodiments.

As shown at block 1030, a final action for the data object is determined from the results of the first and second lookups, i.e., from the first and second actions. In some embodiments, this determination of a final action includes selecting between the first and second actions based on a relative priority between the first and second actions. This relative priority is based on a predetermined relative priority between the first and second associative memory spaces, in some embodiments. In others, the relative priority is based on priority data (described above as "metadata") retrieved from the first and second lookups.

As discussed in detail in connection with Figures 7 and 8, for example, the first and second lookups may be conducted in serial or in parallel, in various implementations. In some embodiments, the second lookup is performed after the first, and is performed in response to an information element retrieved from the first lookup, the information element indicating that an additional associative memory lookup is needed.

Further, while Figure 10 illustrates only two lookup operations, corresponding to two associative memory spaces, some embodiments may use more than two. Thus, in some embodiments the process illustrated in Figure 10 may continue with the retrieval of one or more additional actions for the data object by performing lookups in one or more additional associative memory spaces in the memory unit, using one or more corresponding keys formed from the data object. In these embodiments, the final action is based further on the one or more additional actions, as well as the actions returned in the first and second lookups. As discussed in detail earlier, this may involve selecting from among the actions based on relative priorities and/or metadata associated with the retrieved actions.

As noted above, the method illustrated in Figure 10 and the techniques described above are generally applicable to a variety of data processing devices. One example of such a data processing device is a packet network node, such as a router or switch. In this case, the data objects discussed may be incoming data packets, for example. The first and second keys used in the lookups described above are formed from data fields contained in the data packet, such as from the packet header. Non-limiting examples of data fields that may be used to form the keys include the destination address for the data packet; the source address for the data packet; an optional Internet Protocol (IP) header field; a Type of Service (TOS) field; a differentiated services code point (DSCP) field; an Explicit Congestion Notification (ECN) field; an IP precedence field; a Layer 4 (L4) protocol field; and an L4 information field.

Figure 11 illustrates one possible variant of the method illustrated in Figure 10. In the process shown in Figure 11, the lookups are performed serially. In fact, the second lookup is contingent on the results of the first lookup - depending on the results returned by the first lookup, the second may not be performed at all.

As shown at block 1110, the process begins with the forming of a first key from the data object (e.g., incoming data packet). The first key is used to perform a first lookup in a first associative memory space in an associative memory unit, as shown at block 1120. Depending on the contents of the first associative memory space, this lookup may return an action along with accompanying metadata, such as an information element indicating that an additional associative memory lookup is needed. (One example of such an information element is the "next CAM" field discussed above in the context of Figure 5.) Accordingly, as shown at block 1130, the method continues with an evaluation of whether a second lookup, in a second associative memory space, is required. This evaluation is based on the results (or lack thereof) from the first lookup.

If no second lookup is required, the final action to be taken for the data object is then determined, as shown at block 1160, without recourse to a second lookup. If a second lookup is necessary, however, the process continues with the formation of a second key, from the contents of the data object at issue. This is shown at block 1140, and is followed, as shown at block 1150, by a second lookup, in a second associative memory space, using the second key. As discussed earlier, this second key differs from the first. The process concludes, as shown at block 1160, with the determination of a final action for the data object. Of course, the entire process may be repeated many times, for different data objects.

Several circuits suitable for carrying out the methods illustrated in Figures 10 and 11, as well as variants thereof, have been described. Described generally, these circuits include data processing circuits that include an associative memory storage unit storing a first associative memory space addressable with keys having a first length and a second associative memory space addressable with keys having a second length. These circuits further include a data object classifier configured to receive a plurality of data objects and, for each of the plurality of data objects: retrieve a first action for the data object by performing a first lookup in the first associative memory space, using a first key formed from the data object; retrieve a second action for the data object by performing a second lookup in the second associative memory space, using a second key formed from the data object; and determine a final action for the data object based on the first action or the second action, or both.

In some embodiments of these data processing circuits, the first associative memory space or the second associative memory space, or both, are ternary associative memory spaces, which allow the stored data words to include "don't care" elements.

In several embodiments, the data object classifier includes a prioritizer function that determines a final action by selecting between the first and second actions based on a relative priority between the first and second actions. In some cases, relative priority between the first and second actions is based on a predetermined relative priority between the first and second associative memory spaces. In other cases, the relative priority between the first and second actions is based on priority data retrieved from the first and second lookups.

Data processing circuits according to the above may be configured to perform the lookups in parallel, or serially. In some of the latter embodiments, the second lookup is performed in response to an information element retrieved from the first lookup, the information element indicating that an additional associative memory lookup is needed. Of course, any of the data processing circuits discussed above may include more than two associative memory spaces, in which case the circuit may be configured to retrieve one or more additional actions for the data object by performing lookups in one or more additional associative memory spaces in the associative memory storage unit, using one or more corresponding keys formed from the data object. The circuit is configured to determine the final action based further on the one or more additional actions.

Several hardware implementations are possible. For instance, in some embodiments, the data object classifier circuit comprises a hardware comparison circuit configured to perform the first lookup, using the first key, or the second lookup, using the second key, or both, and to retrieve the corresponding first action or second action, or both. In others, the data object classifier circuit comprises a central processing unit and an associated program memory storage device, the associated program memory storage device comprising computer program instructions, for use by the central processing unit, for performing the first lookup, using the first key, or the second lookup, using the second key, or both, and for retrieving the corresponding first action or second action, or both.

Likewise, several applications for these data processing circuits are possible. In some cases, for example, the data processing circuit is a packet processing circuit for a packet network node, and the data objects discussed above are incoming data packets.

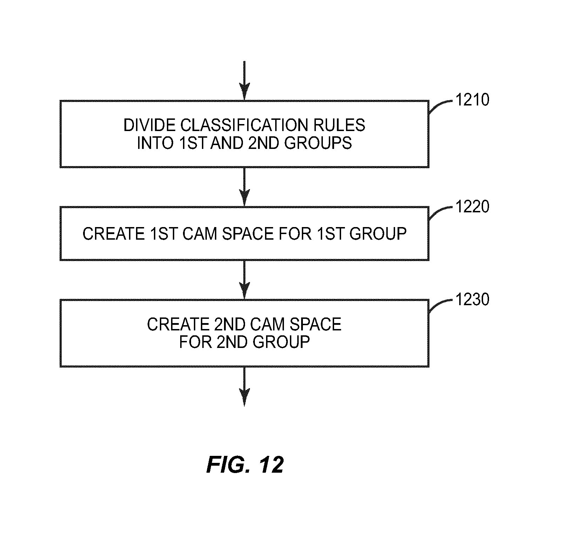

Figures 10 and 11 illustrate processes for classifying data objects, using a multi-space associative memory. Figure 12, on the other hand, illustrates a process for constructing such a multi-space associative memory. More particularly, Figure 12 illustrates a method for constructing a packet classification database for use by a packet network node for retrieving classification rules for data packets. As shown at block 1210, the process begins with the division of a plurality of classification rules into at least first and second rule groups, based on which of a plurality of packet data fields are relevant to each classification rule. Next, as shown at block 1220, a first associative memory space, addressable with keys having a first length, is created. This is done by storing a key value for each classification rule in the first group of rules and a corresponding action in a memory unit. As shown in block 1230, a second associative memory space is created by storing a key value for each classification rule in the second group and a corresponding action in the memory unit. This associative memory space is addressable by keys having a second length.

Although not shown in Figure 12, the illustrated process may further include the deriving of one or more priority values from each of one or more of the classification rules, the one or more priority values indicating which of first and second actions retrieved for a given packet from the first and second associative memory spaces, respectively, should be applied. These priority values are then stored in the first associative memory space or the second associative memory space, or both, in association with key values corresponding to the classification rules from which the priority values were derived.

It will be appreciated that the foregoing description and the accompanying drawings represent non-limiting examples of the methods and apparatus taught herein for creating and using multi-space associative memory units. These methods and apparatus can provide several advantages depending on their specific implementations. In particular, many embodiments use fewer memory resources than would be required with conventional techniques, while providing the same search results. This may result in improvements in speed and/or power consumption, as well.

While many of the examples provided herein were presented in the context of a packet network node, it has been shown that the techniques are not limited to packet data processing, and are more generally applicable to data processing applications. As such, the inventive apparatus and techniques taught herein are not limited by the foregoing description and accompanying drawings. Instead, the present invention is limited only by the following claims and their legal equivalents.

**Claims**

1.  A method, in a data processing device, for retrieving classification rules for data objects, the method comprising, for each of a plurality of data objects:

    retrieving a first action for the data object by performing a first lookup in a first associative memory space in a memory unit, using a first key formed from the data object;
    retrieving a second action for the data object by performing a second lookup in a second associative memory space in a memory unit, using a second key formed from the data object, wherein the second key differs from the first key;
    determining a final action for the data object based on the first action or the second action, or both.

2.  The method of claim 1, wherein determining a final action comprises selecting between the first and second actions based on a relative priority between the first and second actions.

3.  The method of claim 2, wherein the relative priority between the first and second actions is based on a predetermined relative priority between the first and second associative memory spaces.

4.  The method of claim 2, further comprising determining the relative priority between the first and second actions based on priority data retrieved from the first and second lookups.

5.  The method of claim 1, wherein the second lookup is performed in response to an information element retrieved from the first lookup, the information element indicating that an additional associative memory lookup is needed.

6.  The method of claim 1, further comprising, for each of one or more of the plurality of data objects, retrieving one or more additional actions for the data object by performing lookups in one or more additional associative memory spaces in the memory unit, using one or more corresponding keys formed from the data object, wherein determining the final action is based further on the one or more additional actions.

7.  The method of claim 1, wherein said data processing device is a packet network node and wherein said data objects are incoming data packets.

8.  The method of claim 1, further comprising, for each of the incoming data packets, forming the first key and second key from data fields contained in the data packet, wherein one or more of the data fields are selected from the group consisting of:

    a destination address for the data packet;
    a source address for the data packet;
    an optional Internet Protocol (IP) header field;
    a Type of Service (TOS) field;
    a differentiated services code point (DSCP) field;
    an Explicit Congestion Notification (ECN) field;
    an IP precedence field;
    a Layer 4 (L4) protocol field; and
    an L4 information field.

9.  A data processing circuit comprising
    an associative memory storage unit storing a first associative memory space addressable with keys having a first length and a second associative memory space addressable with keys having a second length, and
    a data object classifier configured to receive a plurality of data objects and, for each of the plurality of data objects:

    retrieve a first action for the data object by performing a first lookup in the first associative memory space, using a first key formed from the data object;
    retrieve a second action for the data object by performing a second lookup in the second associative memory space, using a second key formed from the data object; and

determine a final action for the data object based on the first action or the second action, or both.

10. The data processing circuit of claim 9, wherein the first associative memory space or the second associative memory space, or both, are ternary associative memory spaces.

11. The data processing circuit of claim 9, wherein the data object classifier is configured to determine the final action by selecting between the first and second actions, based on a relative priority between the first and second actions.

12. The data processing circuit of claim 11, wherein the relative priority between the first and second actions is based on a predetermined relative priority between the first and second associative memory spaces.

13. The data processing circuit of claim 11, wherein the relative priority between the first and second actions is based on priority data retrieved from the first and second lookups.

14. The data processing circuit of claim 9, wherein the data object classifier is configured to perform the second lookup in response to an information element retrieved from the first lookup, the information element indicating that an additional associative memory lookup is needed.

15. The data processing circuit of claim 9, wherein the data object classifier is configured to retrieve one or more additional actions for the data object by performing lookups in one or more additional associative memory spaces in the associative memory storage unit, using one or more corresponding keys formed from the data object, and to determine the final action is based further on the one or more additional actions.

16. The data processing circuit of claim 9, wherein the data object classifier circuit comprises a hardware comparison circuit configured to perform the first lookup, using the first key, or the second lookup, using the second key, or both, and to retrieve the corresponding first action or second action, or both.

17. The data processing circuit of claim 9, wherein the data object classifier circuit comprises a central processing unit and an associated program memory storage device, the associated program memory storage device comprising computer program instructions, for use by the central processing unit, for performing the first lookup, using the first key, or the second lookup, using the second key, or both, and for retrieving the corresponding first action or second action, or both.

18. The data processing circuit of claim 9, wherein said data processing circuit is a packet processing circuit for a packet network node, and wherein said data objects are incoming data packets.

19. A method for constructing a packet classification database for use by a packet network node for retrieving classification rules for data packets, the method comprising:

dividing a plurality of classification rules into at least first and second rule groups, based on which of a plurality of packet data fields are relevant to each classification rule;

creating a first associative memory space addressable with keys having a first length by storing a key value for each classification rule in the first group and a corresponding action in a memory unit; and

creating a second associative memory space addressable with keys having a second length by storing a key value for each classification rule in the second group and a corresponding action in the memory unit.

20. The method of claim 19, further comprising:

deriving one or more priority values from each of one or more of the classification rules, the one or more priority values indicating which of first and second actions retrieved for a given packet from the first and second associative memory spaces, respectively, should be applied; and

storing the priority values in the first associative memory space or the second associative memory space, or both, in association with key values corresponding to the classification rules from which the priority values were derived.

MATCH LOCATION AND/OR ASSOCIATED DATA

MATCH ENCODER 130

MATCH LINES

ASSOCIATIVE MEMORY SPACE 110

STORED WORD 0

STORED WORD 1

...

STORED WORD N-2

STORED WORD N-1

SEARCH LINES 1...n

KEY REGISTER 120

100

FIG. 1

**FIG. 2**

EP 2 651 095 A2

**FIG. 3**
**PRIOR ART**

RULES (S)

BUILDER
410

S1    S2    S3

$$Size = kSize(S1)*rSize(S1) +$$
$$kSize(S2)*rSize(S2) +$$
$$kSize(Sn)*rSize(Sn)$$

IMAGE DB
420

K1(S1)    K2(S2)    K2(S3)

A1, A2, A3

DATA

CLASSIFIER
430

PRIORITIZER
435

PERFORM
ACTION

**FIG. 4**

EP 2 651 095 A2

| PROVISIONED DATABASE | | |
|---|---|---|
| PRIO | ACTION | TUPLE (KEY SIZE 160) |
| 1 | DROP | |
| 2 | DROP | (x, y, z) |
| 3 | PERMIT | (x, y, DON'T CARE) |
| 4 | PERMIT | |
| 5 | PERMIT | |

510

$$Size = kSize(S)*rSize(S)$$
$$= 5*320$$
$$= 1600$$

| CAM DB #1 | | | META DATA | |
|---|---|---|---|---|
| TCAM PRIO | ACTION | TUPLE (KEY SIZE 160) | PRIO | NEXT CAM |
| 1 | DROP | | 1 | 0 |
| 2 | PERMIT | (x, y) | 3 | 2 |
| 3 | PERMIT | | 4 | 2 |
| | | | | |
| | | | | |

520

| CAM DB #2 | | | META DATA | |
|---|---|---|---|---|
| TCAM PRIO | ACTION | TUPLE (KEY SIZE 320) | PRIO | NEXT CAM |
| 1 | DROP | (x, y, z) | 2 | 0 |
| 2 | PERMIT | | 5 | 0 |
| | | | | |
| | | | | |

530

$$Size(S1) = kSize(S1)*rSize(S1)$$
$$= 3*160$$
$$= 480$$

$$Size(S2) = kSize(S2)*rSize(S2)$$
$$= 2*320$$
$$= 640$$

$$NewSize = 480 + 640 = 1120$$

*FIG. 5*

EP 2 651 095 A2

**FIG. 6**

**FIG. 7**

*FIG. 8*

EP 2 651 095 A2

*FIG. 9*

EP 2 651 095 A2

EP 2 651 095 A2

```
        ┌──────────────────────────────────┐  ┌ 1010
        │  PERFORM LOOKUP IN 1ST CAM SPACE  │
        └──────────────────────────────────┘
                        │
                        ▼
        ┌──────────────────────────────────┐  ┌ 1020
        │  PERFORM LOOKUP IN 2ND CAM SPACE  │
        └──────────────────────────────────┘
                        │
                        ▼
        ┌──────────────────────────────────┐  ┌ 1030
        │       DETERMINE FINAL ACTION      │
        │      BASED ON LOOKUP RESULTS      │
        └──────────────────────────────────┘
                        │
                        ▼
```

**FIG. 10**

```
        ┌──────────────────────────────────┐  ┌ 1110
        │            FORM 1ST KEY           │
        └──────────────────────────────────┘
                        │
                        ▼
        ┌──────────────────────────────────┐  ┌ 1120
        │  PERFORM LOOKUP IN 1ST CAM SPACE  │
        └──────────────────────────────────┘
                        │
                        ▼
                                              ┌ 1130
                     ◇◇◇◇◇◇◇◇◇◇◇◇◇◇
          NO        ◇  2ND LOOKUP  ◇
      ┌────────────◇   REQUIRED?   ◇
      │             ◇◇◇◇◇◇◇◇◇◇◇◇◇◇
      │                    │ YES
      │                    ▼
      │   ┌──────────────────────────────────┐  ┌ 1140
      │   │            FORM 2ND KEY           │
      │   └──────────────────────────────────┘
      │                    │
      │                    ▼
      │   ┌──────────────────────────────────┐  ┌ 1150
      │   │  PERFORM LOOKUP IN 2ND CAM SPACE  │
      │   └──────────────────────────────────┘
      │                    │
      │                    ▼
      │   ┌──────────────────────────────────┐  ┌ 1160
      └──▶│       DETERMINE FINAL ACTION      │
          │      BASED ON LOOKUP RESULT(S)    │
          └──────────────────────────────────┘
```

**FIG. 11**

```
                                            ┌─ 1210
      ┌──────────────────────────────────┐
      │     DIVIDE CLASSIFICATION RULES   │
      │       INTO 1ST AND 2ND GROUPS     │
      └──────────────────────────────────┘

                                            ┌─ 1220
      ┌──────────────────────────────────┐
      │  CREATE 1ST CAM SPACE FOR 1ST GROUP │
      └──────────────────────────────────┘

                                            ┌─ 1230
      ┌──────────────────────────────────┐
      │       CREATE 2ND CAM SPACE       │
      │           FOR 2ND GROUP          │
      └──────────────────────────────────┘
```

*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. PAGIAMTZIS ; A. SHEIKHOLESLAMI.** Content-Addressable Memory (CAM) Circuits and Architectures: A Tutorial and Survey. *IEEE Journal of Solid-State Circuits,* March 2006, vol. 41 (3

- **K. LAKSHMINARAYANAN et al.** Algorithms for Advanced Packet Classification with Ternary CAMs. *SIGCOMM '05,* 21 August 2005